# FASCICULE DE BREVET EUROPEEN

(11) **EP 0 838 995 B1**
(45) Date de publication et mention de la délivrance du brevet: **04.04.2001**
(21) Numéro de dépôt: 96925808.6
(22) Date de dépôt: 17.07.1996
(51) Int. Cl.: A01G 13/02

(54) **PROCEDE DE CULTURE DE LA VIGNE PALISSEE ET DISPOSITIF POUR SA MISE EN OEUVRE**
VERFAHREN ZUR KULTIVIERUNG DER AUFGEBUNDENEN REBE UND EINRICHTUNG ZU DESSEN DURCHFÜHRUNG
METHOD FOR GROWING TRAINED VINES AND DEVICE THEREFOR

(30) Priorité: 17.07.1995 FR 9508828; 05.10.1995 FR 9511953
(43) Date de publication de la demande: 06.05.1998
(73) Titulaire: Seinsevin, Daniel, 33420 Saint-Vincent-de-Pertignas (FR)
(72) Inventeur: Seinsevin, Daniel, 33420 Saint-Vincent-de-Pertignas (FR)
(74) Mandataire: Nony, Michel
(86) Numéro de dépôt international: FR9601121
(87) Numéro de publication internationale: WO9703553

(56) Documents cités:
- CH-A- 423 339
- CH-A- 513 575
- FR-A- 2 271 764
- FR-A- 2 281 717
- FR-A- 2 678 805
- FR-A- 2 724 815
- US-A- 3 160 986
- US-A- 4 044 501
- US-A- 4 798 023
- DATABASE WPI Section PQ, Week 8246 Derwent Publications Ltd., London, GB; Class P13, AN 82-q1033e [46] XP002018052 & SU,A,895 357 (MACHAIDZE)

## Description

La présente invention concerne la culture de la vigne palissée en rangs, et plus particulièrement un procédé de culture destiné notamment à éviter l'effet du gel et à favoriser une bonne fructification.

On connaît par FR-2 281 717 un procédé de culture consistant à recouvrir les rangs de vigne par un film imperméable en matière plastique déposé à cheval sur des fils de support s'étendant entre des piquets, ce film formant un tunnel permettant de maintenir la température de la vigne au-dessus de la température de destruction des bourgeons par le froid. Un tel procédé de culture n'offre pas entière satisfaction.

En effet, on a constaté qu'un tel film ne permet pas toujours de garder la vigne dans un état sanitaire satisfaisant et qu'en outre l'effet de serre est susceptible de soumettre la vigne, les jours de beau temps, à une chaleur excessive, capable d'influencer défavorablement la qualité du vin produit, notamment en diminuant la richesse des arômes.

L'invention vise à éviter différentes difficultés que l'on rencontre dans la culture de la vigne, sans pour autant que cela nuise à la qualité du vin obtenu.

L'invention y parvient grâce à un procédé de culture de la vigne palissée en rangs, destiné notamment à éviter l'effet du gel et à favoriser une bonne fructification, du type consistant à placer à cheval sur chaque rang de vigne un film en matière plastique, ce film étant supporté, d'une part par au moins un fil supérieur situé à la partie supérieure d'une rangée de piquets, et d'autre part par des éléments écarteurs pour écarter les deux pans du film, ce dernier étant maintenu par des attaches assujetties de place en place sur ses bords inférieurs et reliées à des organes d'ancrage situés de préférence sur lesdits piquets, caractérisé par le fait que l'on dispose les bords inférieurs du film sensiblement au niveau et de préférence, légèrement en dessous de la hauteur à laquelle la végétation de la vigne se développe, en laissant entre ces bords une ouverture importante permettant une circulation d'air grâce au fait que les parties latérales du film, qui sont situées au-dessus des éléments écarteurs, sont munies d'orifices permettant la ventilation de la vigne à l'intérieur du film, ces orifices créant avec l'ouverture ménagée entre les bords inférieurs du film des courants d'air au voisinage de la végétation, le film étant mis en place peu de temps avant le démarrage de la végétation, pour le laisser au moins jusqu'à la fin des risques de gelée.

Grâce à l'invention, on évite ou on limite fortement, malgré la ventilation de la vigne par lesdits orifices, les conséquences des gelées printanières qui risquent, le plus souvent, d'intervenir au moment du départ de la végétation.

De préférence, on laisse selon l'invention le film jusqu'après la fin de la période de fructification pour favoriser la façon dont cette dernière se produit.

On utilise de préférence un film qui possède à sa partie supérieure des orifices dont le diamètre est par exemple de l'ordre d'un centimètre, et dont la surface totale correspond à une valeur comprise entre 100 cm² et 1000 cm² par mètre linéaire de film, et de préférence comprise entre 200 cm² et 500 cm² par mètre linéaire de film.

De préférence, les orifices sont situés sur chaque pan de film.

Pour faciliter la maturation des raisins, après avoir cultivé normalement la vigne jusqu'en début de véraison, on pose de préférence le film précité à cheval sur le fil de supérieur du rang de vigne, fil qui a été réhaussé de manière à se situer au-dessus de la végétation de la vigne, le film reposant latéralement sur les éléments écarteurs, et étant maintenu par ses bords inférieurs par lesdites attaches, les bords inférieurs se trouvant à un niveau situé sensiblement au-dessus des raisins, et on enlève le film juste avant de vendanger la récolte.

Selon une mise en oeuvre particulière du procédé selon l'invention, on tend en outre sur le sol, entre les rangs de vigne, un film plastique destiné à évacuer l'eau en bout des rangs pour éviter qu'elle ne pénètre dans le sol.

On a remarqué que, d'une manière surprenante, les vignes munies du film selon l'invention sont beaucoup moins sensibles à la gelée et supportent par exemple des températures de -3°C, alors que la température de l'air au voisinage de la végétation sous le film n'est supérieure que de 1°C à la température ambiante externe.

D'une manière étonnante l'invention permet également d'améliorer la fructification en évitant les phénomènes connus sous le nom de coulure ou de millerandage qui correspondent au fait qu'une proportion plus ou moins grande des fleurs de la vigne ne se transforme pas en graines, ou par le fait que la transformation des fleurs en graines s'effectue de manière très échelonnée dans le temps, ce qui conduit au moment de la récolte, à des grappes dont certains grains sont en surmaturation alors que d'autres ne sont pas encore mûrs.

Les essais effectués par le demandeur ont révélé que la mise en oeuvre du procédé selon l'invention assure une fructification particulièrement régulière et complète de la vigne, même dans des conditions climatiques peu favorables.

La mise en oeuvre du procédé selon l'invention présente également l'avantage de réduire considérablement les besoins de traitement contre les différentes maladies de la vigne qui sont sans cela nécessaires. Il s'est révélé en particulier qu'il suffit d'un traitement anticryptogamique avant la mise en place du film et qu'aucun traitement n'est nécessaire jusqu'à la dépose du film qui se situe par exemple fin mai ou début juin, ce qui indépendamment de l'intérêt écologique, représente une économie importante en coût de produits anticryptogamiques et en main d'oeuvre.

Le procédé selon l'invention présente également l'avantage d'assurer une croissance plus régulière de la vigne et de hâter son cycle végétatif d'au moins huit à dix jours, et permet donc de vendanger plus tôt et généralement dans de meilleures conditions climatiques, ce qui est particulièrement intéressant pour des variétés de raisin peu précoces.

Le procédé selon l'invention permet en outre, en utilisant les mêmes films et dispositifs de support, d'éviter de soumettre les raisins en cours de maturation à des pluies qui sont quelquefois abondantes et qui présentent à la fois l'inconvénient d'abaisser le degré alcoolique et de faciliter la pourriture par un excès d'humidité et un éclatement de certains grains de raisin.

L'invention a encore pour objet un dispositif pour la mise en oeuvre du procédé précité.

Dans une réalisation particulière, ce dispositif comporte des bandes de film à placer à cheval sur les rangs de vigne, pourvues sur leur longueur et dans leur région médiane d'orifices, des éléments écarteurs pour maintenir les deux pans du film écartés, des attaches pour maintenir le film par ses bords inférieurs et des moyens de maintien réglables en hauteur du fil supérieur s'étendant entre les piquets d'un rang de vigne.

Dans une réalisation particulière, ce dispositif comporte en outre des bandes de film à disposer sur le sol entre les rangs de vigne pour évacuer l'eau de pluie en bout de rangs.

L'invention sera mieux comprise à la lecture de la description détaillée qui va suivre, d'un exemple non limitatif de mise en oeuvre du procédé selon l'invention, et à l'examen du dessin annexé sur lequel :
- la figure 1 est une vue schématique de côté montrant un rang de vigne recouvert d'un film conformément à une étape du procédé de culture selon l'invention,
- les figures 2 et 3 sont deux vues de face montrant la configuration du film au cours de deux étapes du procédé de culture selon l'invention,
- la figure 4 est une vue schématique en perspective illustrant la mise en place de bandes de film imperméable sur le sol entre les rangs de vigne,
- la figure 5 illustre un mode d'attache de deux bandes de film adjacentes, et
- la figure 6 représente une variante de réalisation d'un organe de maintien d'un fil latéral.

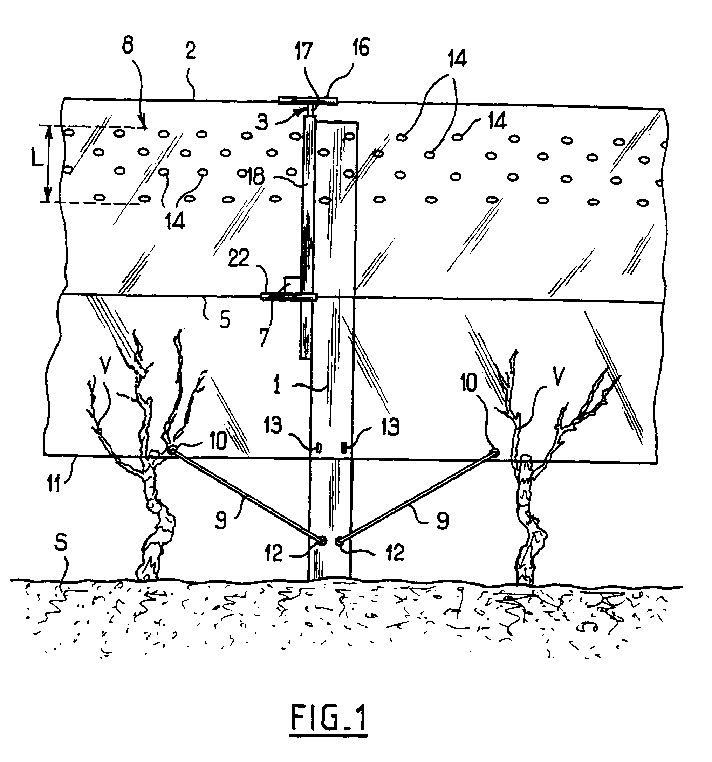

On a représenté de façon schématique sur la figure 1, en élévation latérale, un rang de vigne palissée. Les ceps de vigne V sont disposés en ligne entre des piquets 1, à raison par exemple de quatre ceps entre deux piquets voisins 1.

A titre indicatif, la hauteur des piquets tuteurs 1 par rapport au sol S est par exemple d'environ 1m50.

Des fils de support qui sont au nombre de trois dans l'exemple décrit, relient les piquets 1 d'un même rang de vigne.

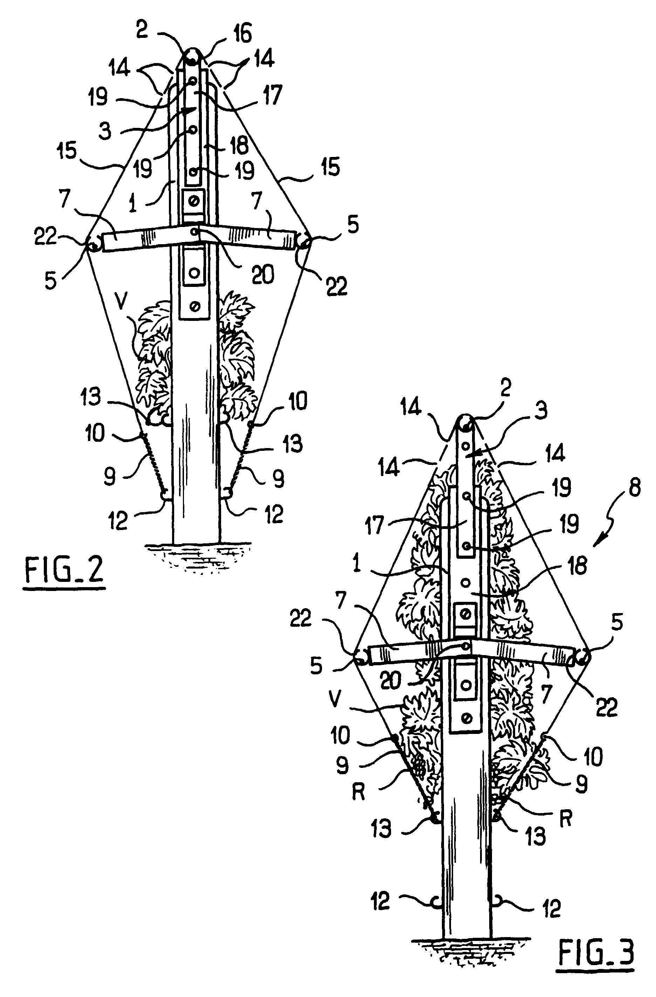

Plus particulièrement, on distingue sur les figures 1 à 3 un fil supérieur 2 assujetti à l'extrémité supérieure de moyens de maintien 3 réglables en hauteur fixés sur chaque piquet 1 et deux fils latéraux 5 maintenus par des bras écarteurs 7. Ces derniers sont articulés sur un pivot 20 et s'étendent, lorsqu'ils sont déployés comme représenté sur les figures 2 et 3, dans un plan sensiblement perpendiculaire aux fils de 2 et 5. Les bras 7 sont fixés par exemple à environ deux tiers de la hauteur du piquet 1.

On ne sort pas du cadre de l'invention lorsque l'on utilise plusieurs fils parallèles et espacés placés en partie haute des piquets à la place d'un seul fil supérieur 2.

Un film 8 en matière plastique transparente ou translucide est placé à cheval sur chaque rang de vigne en reposant sur les fils 2 et 5.

A titre indicatif, dans l'exemple décrit, ce film est constitué par une feuille de polyéthylène de 180 *µ*m environ d'épaisseur et peut présenter une largeur de 1,6m, 2m ou 2m40 par exemple.

Le film 8 repose dans sa région médiane sur le fil supérieur 2 et il est maintenu en place par des cordons élastiques 9, du type sandow, assujettis de place en place à ses bords inférieurs 11. Une extrémité de ces cordons 9 est accrochée à un oeillet 10 du film 8 ou à tout autre moyen d'accrochage tel que des cordons enfilés dans des ourlets du film, l'autre extrémité étant fixée à des crochets solidaires des piquets.

On a représenté à titre d'exemple sur les figures 1 à 3 des crochets 12 et 13 fixés à deux hauteurs différentes en partie basse d'un piquet 1 pour attacher les cordons 9 selon la configuration à donner au film 8, comme cela sera précisé dans la suite.

Dans le mode de réalisation décrit, les parties latérales 15 du film 8 qui sont situées de part et d'autre du fil supérieur 2 et au-dessus des bras écarteurs 7 sont traversées en partie haute par des orifices 14 permettant la ventilation de la vigne à l'intérieur du film, comme cela sera décrit dans la suite.

Dans l'exemple décrit, les orifices 14 sont circulaires, présentent un diamètre de 1 cm environ et sont disposés selon des rangées parallèles dans le sens de la longueur du film 8.

Les orifices 14 sont par exemple une trentaine par rangée et par mètre linéaire, et sont au nombre de 34 dans l'exemple particulier décrit. Le nombre de rangées peut dépendre de la largeur du film.

A titre indicatif, le nombre de rangées par pan de film est par exemple choisi égal à 5 lorsque le film fait 1,6m de large, choisi égal à 6 lorsque le film fait 2m de large et choisi égal à 7 lorsque le film fait 2,4m de large.

La distance séparant deux rangées adjacentes est par exemple de 4 cm environ.

La section totale des orifices 14 par pan de film et par mètre linéaire est comprise, avec les valeurs données ci-dessus, entre 133 cm² et 187 cm².

Bien entendu, les orifices peuvent se présenter sous une autre forme que celle qui est décrite sans que l'on sorte du cadre de l'invention, les orifices présentant toutefois des dimensions suffisamment faibles pour que le film 8 garde son efficacité contre le froid et la pluie.

La largeur L de la zone perforée sur chaque pan du film est par exemple de 19 cm lorsqu'il y a cinq rangées d'orifice, et le bord supérieur de cette zone perforée est par exemple à environ 18 cm du fil supérieur.

Les moyens de maintien 3 du fil supérieur 2 sont constitués dans l'exemple décrit, pour chaque piquet 1, par un manchon 16 fendu longitudinalement à sa partie supérieure pour permettre d'engager le fil à l'intérieur du manchon par cette fente. Le manchon 16 est supporté par une barrette verticale 17, engagée à sa partie inférieure dans un profilé en U 18 fixé verticalement au piquet 1.

La barrette 17 est fixée à la hauteur voulue sur le profilé 18, par exemple au moyen de vis s'engageant dans des orifices 19 réalisés le long de la barrette 17 et choisis en fonction de la hauteur à laquelle on désire placer le fil supérieur 2.

Les bras écarteurs 7 peuvent être immobilisés, par tout moyen connu, dans une position où ils s'étendent sensiblement horizontalement, comme représenté sur les figures 2 et 3, de manière à écarter les fils latéraux 5 et les deux pans du film 8.

Les bras écarteurs 7 peuvent être rabattus vers le bas lorsque le film 8 a été enlevé.

La longueur de chaque bras écarteur est par exemple de l'ordre de 30 cm.

Les fils de support latéraux sont maintenus par des manchons 22 fendus longitudinalement et analogues au manchon 16 précité.

De cette manière, il est possible d'utiliser comme fils latéraux les fils traditionnels de levage qui sont à poste fixe sur la vigne et qui permettent de ramener contre le rang de vigne les pampres qui ont tendance à pousser en s'écartant du rang.

Le film 8 est mis en place peu de temps avant le démarrage de la végétation, de manière à ce que les bords inférieurs 11 du film 8 soient légèrement en dessous de la hauteur à laquelle la végétation de la vigne se développe et à laisser entre les bords inférieurs 11 une ouverture suffisante pour permettre une ventilation de la vigne par un courant d'air entrant par l'espace ménagé entre les bords inférieurs 11 et sortant par les orifices 14. Les cordons élastiques 9 sont fixés aux crochets 12, comme représenté sur les figures 1 et 2.

A titre indicatif, l'espacement entre les bords d'extrémité 11 est par exemple compris entre 20 et 50 cm.

La hauteur à laquelle se situent par rapport au sol les bords d'extrémité 11 lors de cette étape du procédé dépend de la nature de la vigne et de la façon dont cette dernière a été taillée.

On a constaté de façon surprenante que la présence des orifices 14 permet d'obtenir au voisinage de la végétation, sous le film 8, des courants d'air de vitesse relativement élevée, de l'ordre de 5 km/h, qui évitent un échauffement excessif de l'air à l'intérieur du film sans enlever au film son rôle protecteur vis-à-vis des gelées.

On notera que malgré l'emploi du film 8 et des bras écarteurs 7, un espace suffisant subsiste entre les rangs de vigne pour la circulation du personnel et le passage d'un tracteur enjambeur.

Le film 8 peut être enlevé lorsque les risques de gelée ont disparu, mais conformément à l'invention, il est avantageux de le conserver jusqu'à la fin du processus de fructification, ce qui présente l'avantage de ne pas avoir besoin d'effectuer pendant cette période des traitements contre les maladies de la vigne, et d'assurer une parfaite fructification sans coulure ni millerandage.

Ce procédé selon l'invention procure en outre une avance de une à deux semaines dans le processus de végétation, ce qui est particulièrement utile pour les cépages tardifs.

Après avoir cultivé normalement la vigne sans film jusqu'en début de véraison, on remet avantageusement en place le film 8 après avoir réhaussé le fil de support supérieur 2 et relevé le cas échéant les bras écarteurs 7.

A titre indicatif, le fil supérieur 2 est par exemple réhaussé de 20 cm, en agissant sur la fixation de la barrette 17 sur le profilé 18.

On dispose ensuite le film 8 sur les fils 2 et 5 en veillant à ce que les bords inférieurs 11 de celui-ci se trouvent à un niveau situé sensiblement au-dessus des raisins R, comme représenté schématiquement sur la figure 3. Les cordons élastiques 9 sont attachés sur les crochets 13.

De cette manière, les raisins sont directement exposés aux rayons du soleil et il est possible de pratiquer un effeuillage de la vigne qui accélère le mûrissement du raisin.

Avantageusement, on tend en outre entre les rangs de vigne, pendant la période suivant le début de la véraison et précédant la récolte, des bandes 33 de film imperméable destinées à évacuer l'eau en bout des rangs pour éviter qu'elle ne pénètre dans le sol, comme illustré sur la figure 10.

Les bandes 33 sont utilement mises en place alors que le film 8 protège la vigne comme expliqué plus haut.

Les bandes 33 ont une largeur sensiblement égale à la distance séparant deux rangées de piquets de deux rangs de vigne adjacents, et elles sont mises en place en étant déroulées sur le sol entre les rangs de vigne.

Les bandes 33 sont munies sur leurs quatre bords d'ourlets de renforcement 34.

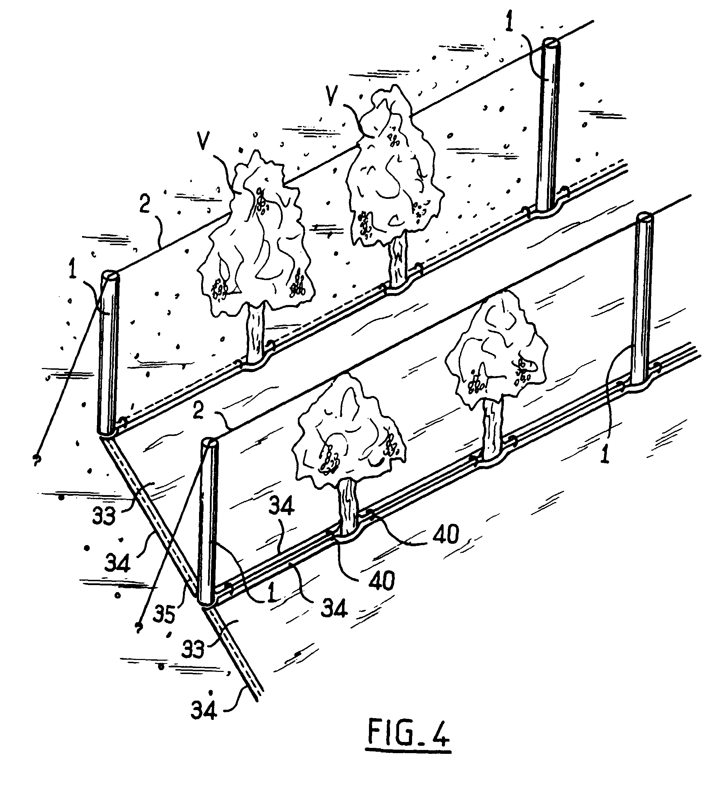

Des cordons 35 représentés schématiquement sur la figure 4 peuvent être engagés à l'intérieur des ourlets 34 qui s'étendent dans le sens de la largeur des bandes 33 et fixés aux piquets d'extrémité des rangs de vigne.

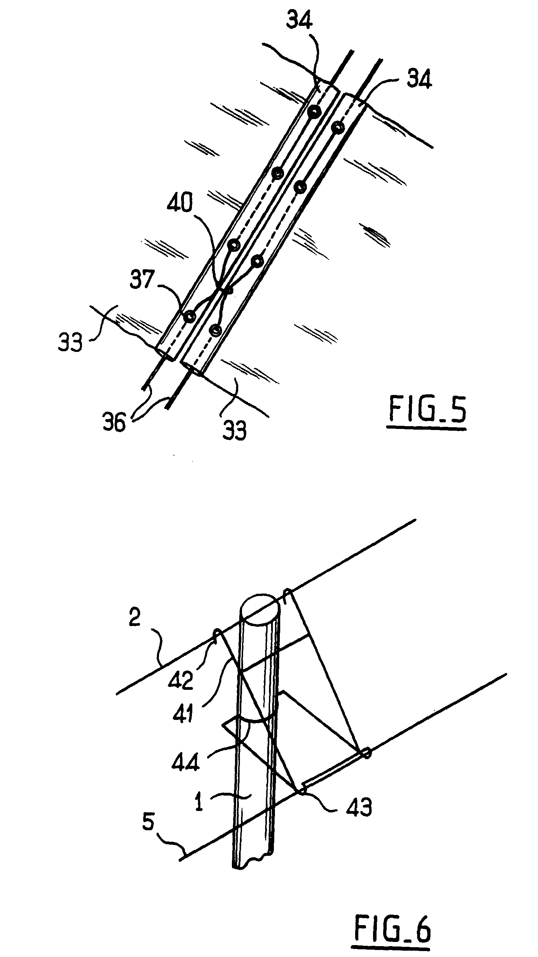

Les bandes 33 sont en outre reliées entre elles deux par deux par des attaches 40, comme représenté sur la figure 5.

Ces attaches 40 viennent s'accrocher, dans l'exemple de réalisation décrit, sur des cordons 36 qui s'étendent parallèlement aux rangs de vigne en étant tendus entre les piquets d'extrémité des rangs de vigne.

Les ourlets 34 qui s'étendent dans le sens de la longueur des bandes sont traversés dans l'exemple décrit de place en place par des oeillets 37, dans lesquels sont engagés les cordons 36 de manière à maintenir ainsi les bandes 33 plaquées sur le sol.

Bien entendu, d'autres moyens connus peuvent être proposés pour maintenir les bandes sur le sol et attacher entre elles les bandes adjacentes.

Le procédé selon l'invention présente, lorsqu'il est utilisé pendant la phase de véraison, l'avantage de protéger le raisin contre l'excès d'humidité en le protégeant contre la pluie et en évitant une humidité excessive du sol qui produit une remontée de la sève et fait éclater les raisins.

Le procédé selon l'invention permet donc d'assurer une récolte de meilleure qualité, plus précoce, à l'abri des aléas climatiques et ne nécessitant que des traitements réduits contre les maladies.

Bien entendu, l'invention n'est pas limitée à ce qui vient d'être décrit.

On peut notamment utiliser divers moyens pour maintenir les fils supérieur et latéraux, et utiliser par exemple pour supporter chaque fil latéral un support 41 tel que représenté sur la figure 6, qui s'accroche à sa partie haute par deux crochets 42 sur le fil supérieur 2 et présente en partie basse à une extrémité 44 une forme incurvée adaptée à reposer contre le piquet. Le support 41 comporte en partie basse à l'opposé de l'extrémité 44 venant en appui contre le piquet 1 deux crochets 43 sur lesquels peut être accroché le fil latéral 5. Un tel support 41 peut être réalisé en fil d'acier par exemple.

## Revendications

1. Procédé de culture de la vigne palissée en rangs, destiné notamment à éviter l'effet du gel et à favoriser une bonne fructification, du type consistant à placer à cheval sur chaque rang de vigne un film (8) en matière plastique, ce film étant supporté, d'une part par au moins un fil supérieur (2) situé à la partie supérieure d'une rangée de piquets (1), et d'autre part par des éléments écarteurs (5,7) pour écarter les deux deux pans du film (8), ce dernier étant maintenu par des attaches (9) assujetties de place en place sur ses bords inférieurs (11) et reliées à des organes d'ancrage (12,13) situés de préférence sur lesdits piquets, caractérisé par le fait que l'on dispose lesdits bords inférieurs (11) du film (8) sensiblement au niveau et de préférence, légèrement en dessous de la hauteur à laquelle la végétation de la vigne (V) se développe, en laissant entre ces bords (11) une ouverture importante permettant une circulation d'air grâce au fait que les parties latérales du film qui sont situées au-dessus des éléments écarteurs (5,7) sont munies d'orifices (14) permettant la ventilation de la vigne à l'intérieur du film, ces orifices créant avec l'ouverture ménagée entre les bords inférieurs du film des courants d'air au voisinage de la végétation, le film étant mis en place peu de temps avant le démarrage de la végétation pour le laisser au moins jusqu'à la fin des risques de gelée.

2. Procédé selon la revendication 1, caractérisé par le fait que l'on laisse le film (8) jusqu'après la période de fructification pour favoriser la façon dont cette dernière se produit.

3. Procédé selon l'une des revendications précédentes, caractérisé par le fait que l'on utilise un film qui possède à sa partie supérieure des orifices (14) dont la surface totale correspond à une valeur comprise entre 100 cm² et 1000 cm² par mètre linéaire de film, et de préférence comprise entre 200 cm² et 500 cm² par mètre linéaire de film.

4. Procédé selon l'une quelconque des revendications 1 à 3, caractérisé par le fait que les orifices (14) sont situés sur chaque pan de film.

5. Procédé selon la revendication 3 ou 4, caractérisé par le fait que le diamètre des orifices (14) est d'environ 1 cm.

6. Procédé selon la revendication 4 ou 5, caractérisé par le fait que la largeur du film est d'environ 1,6m et par le fait qu'il comporte 5 rangées parallèles d'orifices sur chaque pan avec une trentaine d'orifices environ sur chaque rangée par mètre linéaire de film.

7. Procédé selon la revendication 4 ou 5, caractérisé par le fait que la largeur du film est d'environ 2m et par le fait qu'il comporte 6 rangées parallèles d'orifices sur chaque pan avec une trentaine d'orifices environ sur chaque rangée par mètre linéaire de film.

8. Procédé selon la revendication 4 ou 5, caractérisé par le fait que la largeur du film est d'environ 2,4m et par le fait qu'il comporte 7 rangées parallèles d'orifices sur chaque pan avec une trentaine d'orifices environ sur chaque rangée par mètre linéaire de film.

9. Procédé pour faciliter la maturation des raisins, caractérisé par le fait qu'après avoir cultivé la vigne jusqu'en début de véraison, on pose le film (8) visé à l'une quelconque des revendications précédentes sur le fil supérieur (2) du rang de vigne (V), le fil étant réhaussé de manière à se situer au-dessus de la végétation de la vigne, le film reposant latéralement sur lesdits éléments écarteurs (5), et étant maintenu par ses bords inférieurs (11) par lesdites attaches (9), les bords inférieurs du film (11) se trouvant à un niveau situé au-dessus des raisins, et par le fait qu'on dépose le film juste avant de vendanger la récolte.

10. Procédé selon la revendication 9, caractérisé par le fait que l'on tend sur le sol entre les rangs de vigne un film plastique (33) destiné à évacuer l'eau en bout des rangs pour éviter qu'elle ne pénètre dans le sol.

11. Procédé selon l'une quelconque des revendications 1 à 10, caractérisé par le fait que lesdites attaches (9) sont constituées par des cordons élastiques.

12. Dispositif pour la mise en oeuvre du procédé tel que défini à l'une quelconque des revendications précédentes, caractérisé par le fait qu'il comporte des bandes de film (8) à placer à cheval sur les rangs de vigne, pourvues sur leur longueur et dans leur région médiane d'orifices (14), des éléments écarteurs pour maintenir les deux pans du film écartés, des attaches (9) pour maintenir le film par ses bords inférieurs (11), des moyens de maintien (3) réglables en hauteur du fil supérieur (2) reliant les piquets d'un même rang de vigne.

13. Dispositif selon la revendication 12, caractérisé par le fait qu'il comporte en outre des bandes de film (33) à disposer sur le sol entre les rangs de vigne pour évacuer l'eau de pluie en bout des rangs.

## Patentansprüche

1. Verfahren zur Kultivierung der an- bzw. aufgebundenen Rebe in Reihen, insbesondere bestimmt zur Vermeidung von Erfrierungseffekten und zur Begünstigung einer guten Fruchtbildung bzw. Befruchtung, von der Art, bei der auf jeder Reihe von Weinreben ein Film bzw. eine Folie (8) aus Plastikmaterial reitend angeordnet wird, wobei der Film einerseits wenigstens an einem oberen Faden bzw. Draht (2), der an dem oberen Teil einer Anordnung von Pfählen (1) angeordnet ist, und zum anderen Teil über Abstandshalterelemente (5, 7) abgestützt bzw. getragen wird, um die zwei Flanken des Filmes (8) zu beabstanden, wobei letztere durch Verbinder bzw. Befestigungen (9) gehalten werden, die Seite an Seite an den untersten Rändern (11) festgelegt sind, und die mit Verankerungselementen (12, 13) verbunden sind, die bevorzugt an den Pfählen vorgesehen sind, dadurch gekennzeichnet, dass die unteren Ränder (11) des Filmes bzw. der Folie (8) genau auf der Ebene und bevorzugt etwas unterhalb der Höhe, in der die Vegetation der Rebe (V) sich entwickelt, wobei zwischen den Rändern (11) eine wesentliche Öffnung gelassen wird, die eine Luftzirkulation dank der Tatsache erlaubt, dass die seitlichen Teile des Filmes bzw. der Folie, die über den Abstandshalterelementen (5, 7) vorgesehen sind, mit Öffnungen (14) ausgestattet sind, die die Ventilierung der Weinrebe in das Innere des Films bzw. der Folie erlauben, wobei die Öffnungen mit der zwischen den unteren Rändern des Filmes bzw. der Folie eingerichteten Öffnung Luftströmungen in der Nachbarschaft der Vegetation erzeugen, wobei der Film bzw. die Folie kurze Zeit vor dem Beginn der Vegetation in Stellung gebracht wird, um sie wenigstens bis zum Ende eines Frostrisikos dort zu lassen.

2. Verfahren nach Anspruch 1, dadurch gekennzeichnet, dass der Film bzw. die Folie (8) bis nach der Befruchtung bzw. Fruchtbildung gelassen wird, um die Weise zu begünstigen, wie sich letztere produziert.

3. Verfahren nach einem der vorstehenden Ansprüche, dadurch gekennzeichnet, dass ein Film bzw. eine Folie verwendet wird, die an ihrem oberen Teil Öffnungen (14) hat, deren Gesamtoberfläche einem Wert entspricht, der zwischen 100 cm² und 1000 cm² pro fortschreitendem Meter des Filmes bzw. der Folie liegt, und die bevorzugt zwischen 200 cm² und 500 cm² pro fortschreitenden Metern des Filmes bzw. der Folie aufweist.

4. Verfahren nach einem der Ansprüche 1 bis 3, dadurch gekennzeichnet, dass die Öffnungen (14) auf jedem Flügel bzw. jeder Seite des Filmes bzw. der Folie vorgesehen sind.

5. Verfahren nach einem der Ansprüche 3 oder 4, dadurch gekennzeichnet, dass der Durchmesser der Öffnungen (14) ungefähr 1 cm beträgt.

6. Verfahren nach einem der Ansprüche 4 oder 5, dadurch gekennzeichnet, dass die Größe des Films bzw. der Folie ungefähr 1,6m beträgt, und dadurch, dass sie 5 parallele Reihen von Öffnungen auf jeder Seite mit ungefähr 30 Öffnungen in jeder Reihe pro fortschreitendem Meter des Filmes bzw. der Folie trägt.

7. Verfahren nach Anspruch 4 oder 5, dadurch gekennzeichnet, dass die Größe des Filmes bzw. der Folie ungefähr 2m beträgt und dadurch, dass sie 6 parallele Reihen von Öffnungen auf jeder Seite mit ungefähr 30 Öffnungen in jeder Reihe pro fortlaufendem Meter des Filmes bzw. der Folie trägt.

8. Verfahren nach einem der Ansprüche 4 oder 5, dadurch gekennzeichnet, dass die Größe des Films bzw. der Folie ungefähr 2,4m beträgt, und dadurch, dass sie 7 parallele Reihen von Öffnungen auf jeder Seite mit ungefähr 30 Öffnungen in jeder Reihe pro fortlaufendem Meter des Filmes bzw. der Folie hat.

9. Verfahren zur Vereinfachung der Reifung der Trauben, dadurch gekennzeichnet, dass, nachdem die Weinreben kultiviert sind bis zum Beginn der Reife der Film bzw. die Folie (8) nach einem der voranstehenden Ansprüche auf den oberen Draht bzw. Faden (2) der Weinrebenreihe (V) verbracht wird, wobei der Faden bzw. der Draht in der Weise gehoben wird, um oberhalb der Vegetation der Weinrebe vorhanden zu sein, wobei der Film seitlich auf den Abstandshalterelementen (11) ruht, und über seine unteren Ränder (11) durch die Befestigungen (9) gehalten wird, wobei sich die unteren Ränder des Filmes bzw. der Folie (11) sich auf einem Niveau oberhalb der Trauben befinden, und dadurch, dass der Film bzw. die Folie unmittelbar vor der Lese der Ernte weggelegt bzw. entfernt wird.

10. Verfahren nach Anspruch 9, dadurch gekennzeichnet, dass auf dem Boden zwischen den Reihen der Weinreben ein Plastikfilm bzw. eine Plastikfolie (33) gespannt wird, die dazu bestimmt ist, das Wasser am Kopfende der Reihen zu entleeren, um zu vermeiden, dass es in den Boden eindringt.

11. Verfahren nach einem der voranstehenden Ansprüche 1 bis 10, dadurch gekennzeichnet, dass die Befestigungen (9) durch elastische Seile bzw. Schnüre gebildet sind.

12. Vorrichtung zur Durchführung des Verfahrens nach irgendeinem der voranstehenden Ansprüche, dadurch gekennzeichnet, dass diese aufweist, eine Film- bzw. Folienbahn (8), um diese reitend auf den Reihen der Weinreben anzuordnen, die über ihre Länge und in ihren Mittelbereich mit Öffnungen (14) versehen ist, Abstandshalterelemente zum Halten der zwei beabstandeten Seiten oder Flanken des Filmes bzw. der Folie, Verbindungen bzw. Befestigungen (9), um den Film bzw. die Folie über deren untere Ränder (11) zu halten, regulierbare Mittel (3) zum Halten des oberen Bandes bzw. Drahtes (2), der die Pfosten einer selbigen Reihe von Weinreben verbindet.

13. Vorrichtung nach Anspruch 12, dadurch gekennzeichnet, dass sie zusätzlich Folien-bzw. Filmbahnen (33) aufweist, die auf dem Boden zwischen den Reihen der Weinreben angeordnet werden, um Regenwasser zum Kopfende der Reihen abzuziehen.

## Claims

1. Method for growing espalier-trained vines in rows, intended in particular to avoid the effect of frost and encourage good fruiting, of the type consisting in placing a film (8) of plastic straddling each row of vines, this film being supported, on the one hand, by at least one upper line (2) located at the upper part of a row of stakes (1) and, on the other hand, by spacer elements (5, 7) for holding the two halves of the film (8) apart, this film being held by fasteners (9), secured at intervals along its lower edges (11) and connected to anchoring members (12, 13) preferably located on the said stakes, characterized in that the said lower edges (11) of the film (8) are arranged roughly level with and preferably slightly below the height at which the vegetation on the vine (V) develops, leaving a substantial opening between these edges (11) to allow air to circulate by virtue of the fact that the lateral parts of the film which are located above the spacer elements (5, 7) have orifices (14) allowing the vine to be ventilated inside the film, these orifices creating, with the opening formed between the lower edges of the film, air streams around the vegetation, the film being fitted shortly before the vegetation starts to appear and left in place at least until the risk of frost has passed.

2. Method according to Claim 1, characterized in that the film (8) is left in place until after the fruiting period to encourage the way in which this fruit is produced.

3. Method according to one of the preceding claims, characterized in that use is made of a film which, at its upper part, has orifices (14), the total area of which corresponds to a value of between 100 cm² and 1000 cm² per linear metre of film and preferably of between 200 cm² and 500 cm² per linear metre of film.

4. Method according to any one of Claims 1 to 3, characterized in that the orifices (14) are on each half of the film.

5. Method according to Claim 3 or 4, characterized in that the diameter of the orifices (14) is about 1 cm.

6. Method according to Claim 4 or 5, characterized in that the width of the film is about 1.6 m and in that it comprises five parallel rows of orifices on each half, with about thirty orifices in each row per linear metre of film.

7. Method according to Claim 4 or 5, characterized in that the width of the film is about 2 m and in that it comprises six parallel rows of orifices on each half, with about thirty orifices in each row per linear metre of film.

8. Method according to Claim 4 or 5, characterized in that the width of the film is about 2.4 m and in that it comprises seven parallel rows of orifices on each half, with about thirty orifices in each row per linear metre of film.

9. Method for encouraging grapes to mature, characterized in that having grown the vine until the grapes begin to ripen, the film (8) according to any one of the preceding claims is laid over the upper line (2) of the row of vines (V), the line being raised so that it lies above the vegetation on the vine, the film resting laterally on the said spacer elements (5), and being held by its lower edges (11) by the said fasteners (9), the lower edges of the film (11) being at a level above the grapes, and in that the film is removed just before harvesting the grape harvest.

10. Method according to Claim 9, characterized in that a plastic film (33) intended to remove the water at the ends of the rows to prevent it from entering the ground is stretched out on the ground between the rows of vines.

11. Method according to any one of Claims 1 to 10, characterized in that the said fasteners (9) consist of elastic cords.

12. Device for implementing the method as defined in any one of the preceding claims, characterized in that it comprises strips of film (8) to straddle the rows of vines, which strips are equipped along their length and in their central region with orifices (14), spacer elements for keeping the two halves of the film apart, fasteners (9) for holding the film via its lower edges (11), height-adjustable means (3) for supporting the upper line (2) connecting the stakes in one same row of vines.

13. Device according to Claim 12, characterized in that it further comprises strips of film (33) to be laid out on the ground between the rows of vines to remove the rainwater at the ends of the rows.
